# EUROPEAN PATENT SPECIFICATION

(11) **EP 3 431 310 B1**
(45) Date of publication and mention of the grant of the patent: **08.01.2020**
(21) Application number: 18181143.1
(22) Date of filing: 02.07.2018
(51) Int. Cl.: B60C 5/14, B60C 19/12, B29D 30/06, B29C 73/16

(54) **PNEUMATIC TIRE AND A METHOD FOR MANUFACTURING THE SAME**
LUFTREIFEN UND VERFAHREN ZUR HERSTELLUNG DAVON
PNEU ET SON PROCÉDÉ DE FABRICATION

(30) Priority: 20.07.2017 JP 2017141142
(43) Date of publication of application: 23.01.2019
(73) Proprietor: Sumitomo Rubber Industries, Ltd., Kobe-shi, Hyogo-ken (JP)
(72) Inventor: SATO, Takuya, Kobe-shi, Hyogo 651-0072 (JP)
(74) Representative: Manitz Finsterwald Patent- und Rechtsanwaltspartnerschaft mbB

(56) References cited:
- DE-A1- 2 629 469
- JP-A- 2016 020 159
- JP-A- 2016 078 690
- US-A1- 2004 149 366

## Description

### Technical Field

The present invention relates to a pneumatic tire provided with a sealant layer arranged on an inner cavity surface.

### Background Art

Conventionally, as disclosed in Japanese Patent No. 5745537, a pneumatic tire is known in which a self-sealing layer and an anti-adhesive layer are arranged on the inner cavity surface. The anti-adhesive layer is composed of particles having a shape factor greater than 5.

However, when lengths of the particles are small, it is possible that sufficient puncture hole filling effect is not obtained. In particular, if running with a foreign object such as a nail stuck in a tread portion, the puncture hole is expanded, therefore, it is possible that sufficient puncture sealing performance is not obtained.

US 2004149366 A1 discloses a pneumatic tire according to the preamble of claim 1.

DE 26 29 469 A1 discloses fiber material for sealing a punctured tire comprising fibers having a length up to 25.4 mm and a maximum fiber diameter of 0.5 mm.

### Summary of the Invention

The present invention was made in view of the above, and a primary object thereof is to provide a pneumatic tire capable of easily improving the sealing performance for a puncture hole.

According to claim 1, a pneumatic tire comprises an inner cavity surface and a sealant layer arranged on the inner cavity surface, wherein the sealant layer includes an adhesive material having adhesiveness and flowability, and fillers each formed in a fibrous or rod-like shape, and each of the fillers has a length more than 5 mm and not more than 30 mm and an outer diameter in a range of from 0.2 to 1.0 mm. The fillers include resin.

In one embodiment, it is preferred that each of the fillers has the length in a range of from 10 to 15 mm.

In one embodiment, it is preferred that the resin is a thermosetting resin.

In one embodiment, it is preferred that the sealant layer includes a mixed layer formed of the fillers and the adhesive material mixed together.

In one embodiment, it is preferred that the sealant layer has a first layer including the fillers and a second layer including only the adhesive material.

In one embodiment, it is preferred that the first layer is arranged on an inner side in a tire radial direction of the second layer.

In one embodiment, it is preferred that a third layer including only the adhesive material is arranged on the inner side in the tire radial direction of the first layer.

In one embodiment, it is preferred that the first layer does not include the adhesive material.

In another aspect of the invention, a method for manufacturing a pneumatic tire according to the claims of the present invention includes steps of vulcanization-molding a green tire, extruding a sealant material including the fillers so as to be formed in a ribbon shape, and forming the sealant layer by spirally winding the extruded sealant material so as to be attached onto the inner cavity surface of the vulcanization-molded tire.

### Brief Description of the Drawings

Fig. 1 is a cross-sectional view showing a configuration of a pneumatic tire of the present invention.
Fig. 2A is a schematic diagram showing a sealant layer and its surroundings of the pneumatic tire in a normal state.
Fig. 2B is a schematic diagram showing the sealant layer and its surroundings of the pneumatic tire with a nail stuck therein.
Fig. 2C is a schematic diagram showing a state in which a puncture hole is sealed by the sealant layer after the nail is removed.
Fig. 3 is a schematic diagram showing a method of measuring an outer diameter of one of fillers.
Fig. 4A is a schematic diagram showing one of the fillers.
Fig. 4B is a schematic diagram showing deflection of one of the fillers.
Fig. 5A is a schematic diagram showing the sealant layer and its surroundings of another pneumatic tire in a normal state.
Fig. 5B is a schematic diagram showing the sealant layer and its surroundings of the another pneumatic tire with a nail stuck therein.
Fig. 5C is a schematic diagram showing a state in which a puncture hole is sealed by the sealant layer after the nail is removed.
Fig. 6A is a schematic diagram showing the sealant layer and its surroundings of yet another pneumatic tire in a normal state.
Fig. 6B is a schematic diagram showing the sealant layer and its surroundings of the yet another pneumatic tire with a nail stuck therein.
Fig. 6C is a schematic diagram showing a state in which a puncture hole is sealed by the sealant layer after the nail is removed.
Fig. 7A is a schematic diagram showing the sealant layer and its surroundings of further another pneumatic tire in a normal state.
Fig. 7B is a schematic diagram showing the sealant layer and its surroundings of the further another pneumatic tire with a nail stuck therein.
Fig. 7C is a schematic diagram showing a state in which a puncture hole is sealed by the sealant layer after the nail is removed.
Fig. 8 is a flowchart showing manufacturing process of the above pneumatic tire.

### Description of the Preferred Embodiment

An embodiment of the present invention will now be described in conjunction with accompanying drawings.

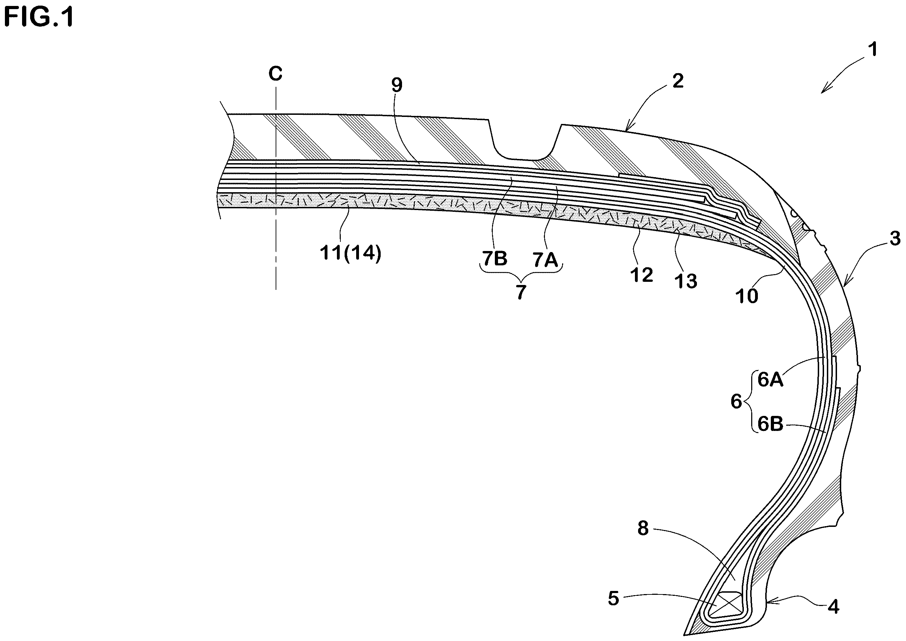

Fig. 1 is a meridian section passing through a tire rotational axis of a pneumatic tire 1 in this embodiment in a standard state. Here, the standard state is a state in which the tire is mounted on a standard rim (not shown), inflated to a standard inner pressure, and loaded with no tire load. Hereinafter, dimensions and the like of various parts of the tire are those measured under the standard state, unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

As shown in Fig. 1, the pneumatic tire (hereinafter may be simply referred to as "tire") 1 in this embodiment includes a carcass 6 extending between bead cores 5 of bead portions 4 via a tread portion 2 and sidewall portions 3, and a belt layer 7 arranged on an outer side in a tire radial direction of the carcass 6 and inside the tread portion 2, and the tire 1 shown in this embodiment is for a passenger car.

The carcass 6 is composed of one carcass ply or two carcass plies 6A and 6B, for example. The carcass ply or each of the carcass plies includes a main body portion extending between the bead cores 5 and turned up portions each being turned up around respective one of the bead cores 5 from inside to outside in a tire axial direction so as to be engaged with the respective one of the bead cores 5. In the carcass plies 6A and 6B, organic fiber cords made of an organic material such as aromatic polyamide and rayon are used as carcass cords, for example. The carcass cords are arranged at an angle in a range of from 70 to 90 degrees with respect to a tire equator C, for example. Between the main body portion and each of the turned up portions, a bead apex rubber 8 extending radially outwardly from respective one of the bead cores 5 in a tapered manner is arranged respectively.

The belt layer 7 in this embodiment is formed by two belt plies 7A and 7B in which belt cords are arranged at an angle in a range of from 15 to 45 degrees with respect to the tire equator C, for example, and the belt plies 7A and 7B are overlapped in the tire radial direction so that the belt cords of the belt ply 7A and the belt cords of the belt ply 7B cross each other. For the belt cords, steel, aramid, rayon or the like is suitably used, for example.

The pneumatic tire 1 in this embodiment is provided with a belt reinforcing layer 9 arranged on an outer side in the tire radial direction of the belt layer 7. The belt reinforcing layer 9 is formed of an organic fiber cord, for example. It is preferred that an angle of the organic fiber cord with respect to a tire circumferential direction is in a range of from 0 to 5 degrees. Note that the belt reinforcing layer 9 may be omitted.

Further, an inner liner layer 10 is provided on an inner circumferential surface of the carcass ply 6A. The inner liner layer 10 is arranged so as to cover almost the entire area between the pair of the bead cores 5 in a toroidal manner. Furthermore, the inner liner layer 10 is made of a rubber having excellent air impermeability such as butyl rubber including not less than 50 parts by weight of halogenated butyl therein, for example, and is useful for maintaining the inner pressure of the pneumatic tire 1.

The pneumatic tire 1 is provided with a sealant layer 11 arranged on an inner cavity surface of the tread portion 2. The sealant layer 11 is provided on an inner circumferential surface of the inner liner layer 10, that is, on an inner side in the tire radial direction of the inner liner layer.

The sealant layer 11 includes an adhesive material 12 having adhesiveness and flowability, and fillers 13 each formed in a fibrous or rod-like shape.

The adhesive material 12 is made of rubber having flowability and adhesiveness for filling a punctured hole. When a puncture hole is formed in the tread portion 2 by rolling on a nail or the like during running, the adhesive material 12 configured as such deforms so as to close the hole, therefore, it suppresses the leakage of the air, for example.

The fillers 13 include resin. The fillers 13 made of resin are flexible, therefore, they easily get into the puncture hole. Further, by using resin, it is possible that the fillers 13 having a uniform shape is provided at low cost. Depending on the usage of the pneumatic tire 1, it is possible that the internal temperature of the tread portion 2 reaches 100 degrees Celsius, therefore, it is preferred that the above resin is a thermosetting resin having heat resistance at the above temperature.

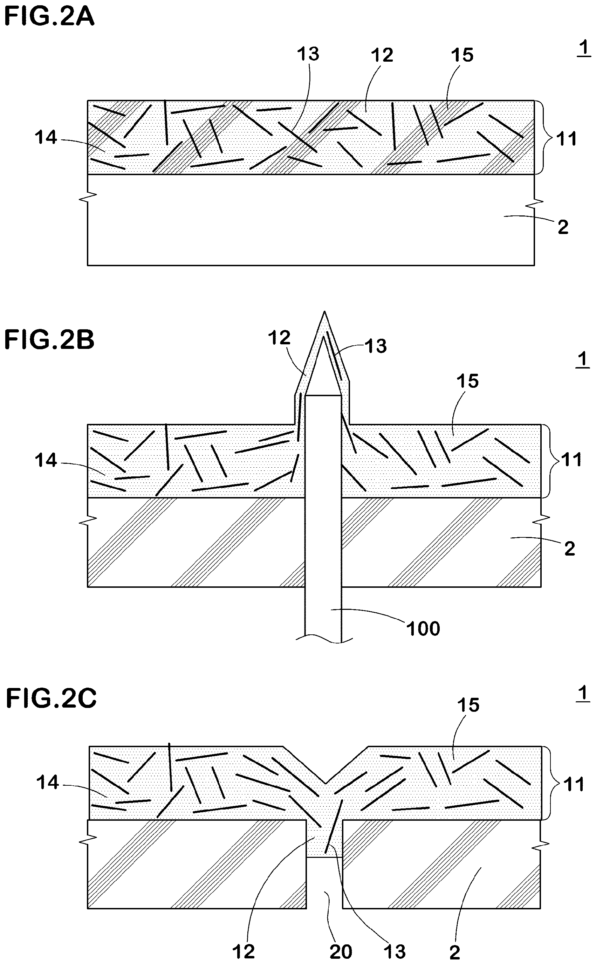

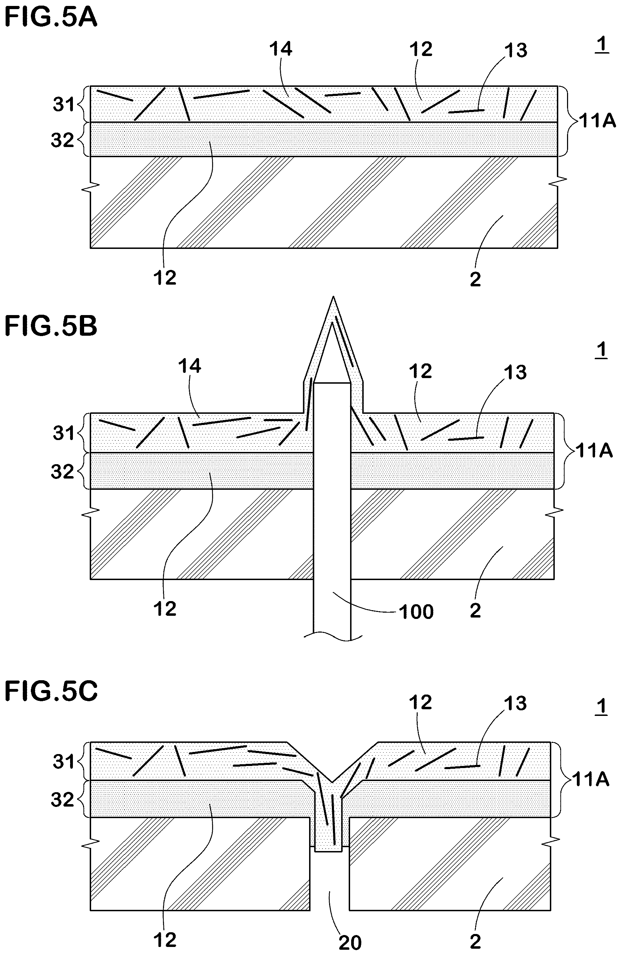

Figs. 2A, 2B, and 2C are schematic diagrams showing the sealant layer 11 and its surroundings. Fig. 2A shows a normal state before a puncture, Fig. 2B shows a puncture caused by a nail penetrating the tread portion 2, and Fig. 2C shows a state in which the puncture hole is sealed (self-repaired) by the sealant layer 11 (Hereinafter, the same also applies to Figs. 5A to 7C). Note that in Figs. 2A to 2C, the carcass 6, the belt layer 7, and the belt reinforcing layer 9 of the tread portion 2 are omitted (the same also applies to Figs. 5A to 7C).

When a foreign object 100 such as a nail penetrating the pneumatic tire 1 is removed from the pneumatic tire 1, the adhesive material 12 flows into a puncture hole 20 (through hole) together with the fillers 13 to fill the puncture hole 20, therefore, the inner pressure of the pneumatic tire 1 is maintained. In particular, even when the puncture hole 20 is expanded due to running with the foreign object 100 stuck in the tread portion 2, the fillers 13 fill the puncture hole 20, therefore, the leakage of the adhesive material 12 from the puncture hole 20 is suppressed, thereby, it is possible that sufficient puncture sealing performance is obtained. Further, the fillers 13 that have flowed into the puncture hole 20 reinforce the adhesive material 12, therefore, the puncture sealing effect is increased.

The fillers 13 in this embodiment have lengths each more than 5 mm and not more than 30 mm and outer diameters each in a range of from 0.2 to 1.0 mm. By including the fillers 13 configured as such in the sealant layer 11, it is possible that the filling effect of the fillers 13 is improved without interfering the flow of the adhesive material 12 to the puncture hole 20. Further, the fillers 13 exposed on the inner cavity surface suppress adhesion of a foreign object such as an insect onto the inner cavity surface of the pneumatic tire 1 during storage, therefore, it is possible that decrease in the commercial value of the pneumatic tire 1 is suppressed.

When the length of each of the fillers 13 is not more than 5 mm, the effect of filling the puncture hole 20 which is expanded during running at high speed with a nail stuck in the tread portion is not sufficiently obtained, therefore, it is possible that the leakage of the adhesive material 12 from the puncture hole 20 is sufficiently suppressed. On the other hand, when the length of each of the fillers 13 is more than 30 mm, it is possible that the flow of the adhesive material 12 into the puncture hole 20 is interfered. Especially when one or some of the fillers 13 are present so as to extend across the puncture hole 20, it is possible that the entry of the other fillers 13 into the puncture hole 20 is interfered. Thereby, as in the above case, it is possible that the effect of filling the expanded puncture hole 20 is not sufficiently obtained.

From the above point of view, it is more preferred that the length of each of the fillers 13 is in a range of from 10 to 15 mm.

Further, when the outer diameter of each of the fillers 13 is less than 0.2 mm, it is possible that the effect of filling the puncture hole 20 is not sufficiently obtained. Therefore, as in the above case, the effect of filling the expanded puncture hole 20 cannot be sufficiently obtained, thereby, it is possible that the leakage of the adhesive material 12 from the puncture hole 20 is not sufficiently suppressed. When the outer diameter of each of the fillers 13 is more than 1.0 mm, it is possible that the fillers 13 do not get into the puncture hole 20 having an inner diameter not more than 1.0 mm, for example.

Besides having a constant outer diameter, each of the fillers 13 may be in the form of fiber or twisted so as not to have a constant outer diameter.

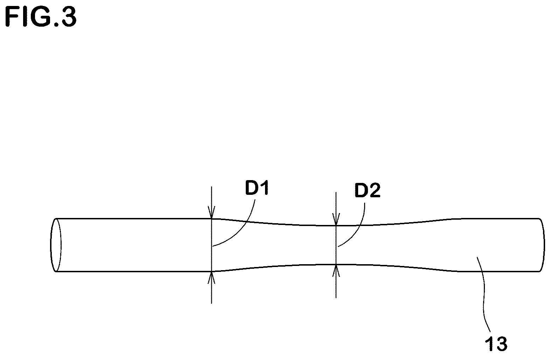

Fig. 3 shows a method of measuring the outer diameter of one of the fillers 13 whose outer diameter varies. That is, in this embodiment, the outer diameters D1 and D2 at a plurality of positions (two positions in Fig. 3) of the filler 13 are measured, and then the average value thereof is calculated as the outer diameter of the filler 13. The measurement positions of the outer diameter can be positions where the outer diameter of the filler 13 is the maximum and the minimum, for example.

The sealant layer 11 includes a mixed layer 14 formed of the adhesive material 12 and the fillers 13 mixed together. In the sealant layer 11 configured as such, the fillers 13 are likely to be dispersed in the adhesive material 12, therefore, the fillers 13 easily fill the puncture hole 20.

It is preferred that the material constituting the adhesive material 12 is a crosslinked material of a composition including butyl rubber, liquid rubber, an inorganic additive, a crosslinking agent, and a crosslinking aid, for example. By the adhesive material 12 configured as such, the flow along the profile of the inner circumferential surface of the inner liner layer 10 due to centrifugal force during running is suppressed.

It is preferred that the liquid rubber mentioned above includes polybutene. Polybutene is a viscous liquid polymer obtained by cationic polymerization of isobutene and normal butene, and has excellent adhesiveness. Further, polybutene has small aging deterioration in adhesiveness and viscosity due to heating and pressurization, and does not become dry and hardened. Thereby, when the rubber material of the adhesive material 12 includes polybutene, adhesiveness and sealing performance are further improved. Note that it is preferred that average molecular weight of the polybutene described above is in a range of from 1000 to 4000.

It is preferred that the inorganic additive mentioned above includes at least one of carbon black, silica, calcium carbonate, calcium silicate, magnesium oxide, aluminum oxide, barium sulfate, talc, and mica.

As the crosslinking agent, in order to improve the heat resistance performance, it is preferred that peroxide which is an organic peroxide is used, for example. Further, crosslinking agents of peroxide are easy to process.

It is preferred that the sealant layer 11 includes the liquid rubber in a range of from 100 to 400 parts by mass, the inorganic additive in a range of from 1 to 30 parts by mass, the crosslinking agent in a range of from 1 to 15 parts by mass, and the crosslinking aid in a range of from 1 to 15 parts by mass with respect to 100 parts by mass of the butyl rubber, for example.

In order to suppress an increase in mass of the pneumatic tire 1 while exerting excellent puncture sealing performance, thickness of the sealant layer 11 is preferably in a range of from 1 to 10 mm, more preferably in a range of from 1.5 to 5.0 mm.

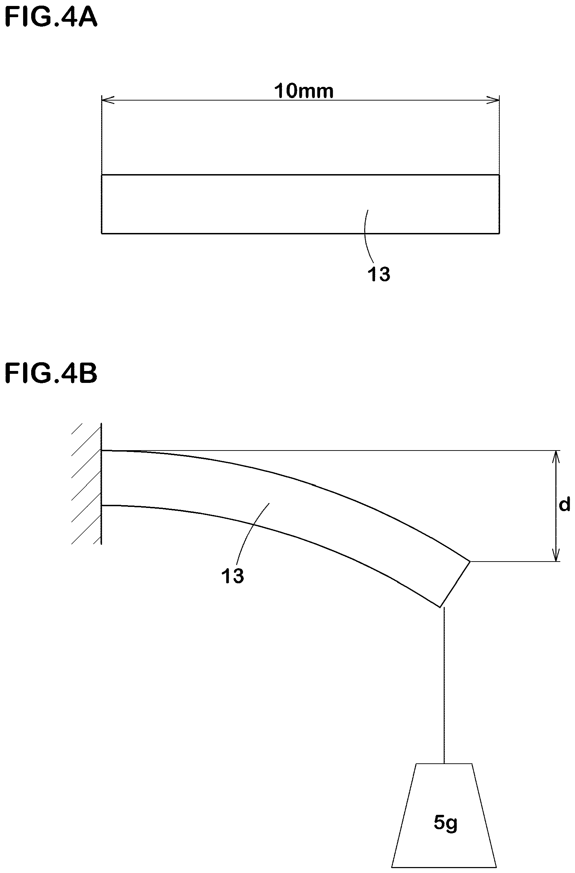

As already mentioned, a flexible material is used for the fillers 13. More specifically, as shown in Figs. 4A and 4B, it is preferred that a deflection (d) of one of the fillers 13 having the length of 10 mm is not less than 3 mm when one end thereof is fixed and a load of 5 g is applied to the other end thereof. When the deflection (d) is less than 3 mm, the flexibility of the filler 13 is insufficient, therefore, it is possible that the fillers 13 entering into the puncture hole 20 is interfered.

Figs. 5A, 5B, and 5C are schematic diagrams showing the sealant layer 11A as a modification of the sealant layer 11 and its surroundings. The configuration of the sealant layer 11 can be applied to the parts of the sealant layer 11A that are not described below.

The sealant layer 11A has a first layer 31 including the fillers 13 and a second layer 32 including only the adhesive material 12. That is, the sealant layer 11A is different from the sealant layer 11 in that the sealant layer 11A is laminated in two or more layers.

The first layer 31 of the sealant layer 11A is the mixed layer 14 including the adhesive material 12 and the fillers 13, and arranged on an inner side in the tire radial direction of the second layer 32. Thereby, as with the sealant layer 11, the fillers 13 exposed on the inner cavity surface suppress adhesion of a foreign object such as an insect onto the inner cavity surface of the pneumatic tire 1 during storage, therefore, it is possible that decrease in the commercial value of the pneumatic tire 1 is suppressed.

On the other hand, the second layer 32 applied on the inner circumferential surface of the inner liner layer 10 is composed only of the adhesive material 12, therefore, when the foreign object 100 is removed, it is less likely that the flow of the adhesive material 12 of the second layer 32 is interfered by the fillers 13. That is, initial flowability of the adhesive material 12 constituting the second layer 32 is excellent, the repair of the puncture hole 20 is completed in a short time, and decrease of the inner pressure is suppressed.

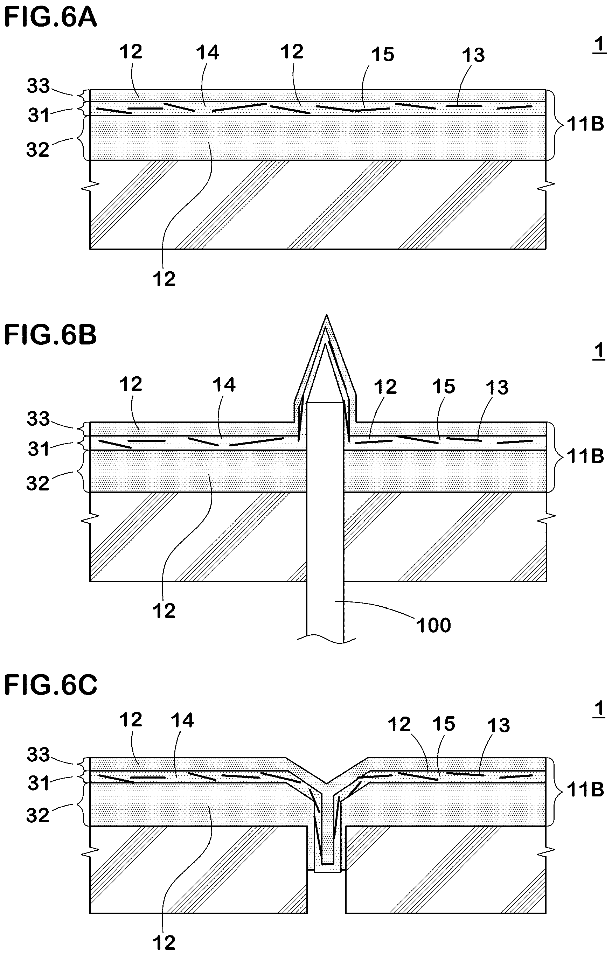

Fig. 6A, 6B, and 6C are schematic diagrams showing the sealant layer 11B as another modification of the sealant layer 11 and its surroundings. The configuration of the sealant layer 11 or 11A can be applied to the parts of the sealant layer 11B that are not described below.

The sealant layer 11B has the first layer 31 including the fillers 13, and the second layer 32 and a third layer 33 formed only of the adhesive material 12. That is, the sealant layer 11B is different from the sealant layer 11 in that the sealant layer 11B is laminated in three or more layers. Further, the sealant layer 11B is different from the sealant layer 11A in that the third layer 33 composed only of the adhesive material 12 is arranged on the inner cavity surface of the pneumatic tire 1.

In the sealant layer 11B, the third layer 33 composed only of the adhesive material 12 is arranged innermost in the tire radial direction of the tread portion 2, therefore, it is possible that excellent sealing performance is obtained.

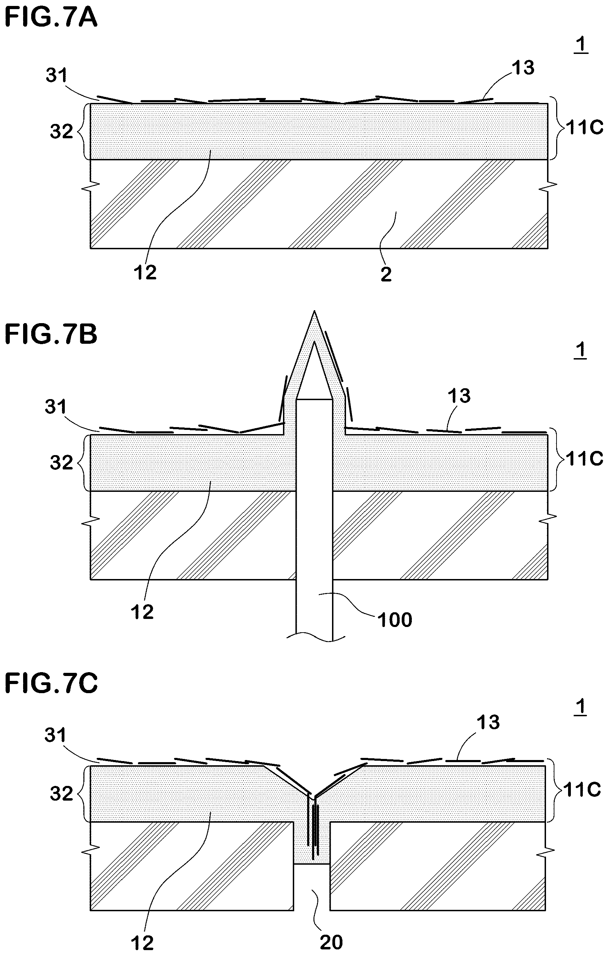

Figs. 7A, 7B, and 7C are schematic diagrams showing a sealant layer 11C as yet another modification of the sealant layer 11 and its surroundings. The configuration of the sealant layer 11 or 11A can be applied to the parts of the sealant layer 11C that are not described below.

The sealant layer 11C is different from the sealant layer 11A in that the first layer 31 does not include the adhesive material 12. That is, the fillers 13 are attached to an inner surface of the second layer 32 formed only of the adhesive material 12. In the sealant layer 11C, the adhesive material 12 forming the second layer 32 is covered by the fillers 13, therefore, it is not exposed to the inner cavity surface of the pneumatic tire 1, thus, adhesion of a foreign object such as an insect onto the inner cavity surface of the pneumatic tire 1 during storage is further suppressed, thereby, it is possible that decrease in the commercial value of the pneumatic tire 1 is further suppressed.

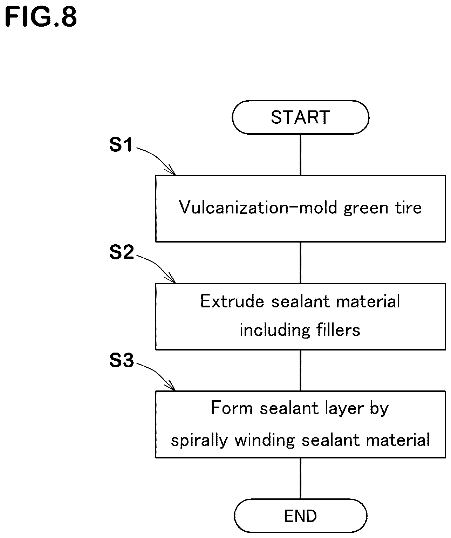

Fig. 8 is a flowchart showing each step of the method for manufacturing the pneumatic tire 1 shown in Figs. 1 and 2. The method for manufacturing the pneumatic tire 1 includes a Step S1 of vulcanization-molding a green tire, a Step S2 of extruding a sealant material including the fillers 13 so as to be formed in a ribbon shape, and a Step S3 of forming the sealant layer 11 (mixed layer 14) by spirally winding the extruded sealant material so as to be attached onto the inner cavity surface of the vulcanization-molded tire.

In the Step S1, a green tire is vulcanization-molded in the same manner as a normal pneumatic tire.

In the Step S2, a sealant material 15 (see Fig. 2) in which the adhesive material 12 and the fillers 13 are mixed is extruded in a ribbon shape. The sealant material 15 is extruded by using a twin-screw kneading extruder, for example. That is, the materials constituting the adhesive material 12 and the fillers 13 are put into the twin-screw kneading extruder, and then the sealant material 15 is extruded in a ribbon shape.

In the Step S3, the sealant layer 11 is formed by spirally winding the sealant material 15 in the same manner as a known method of manufacturing a sealant tire disclosed in Japanese Unexamined Patent Publication No. 2016-78822, for example.

In a method for manufacturing the pneumatic tire 1 shown in Fig. 5, before the Step S2, a step of extruding the adhesive material 12 into a ribbon shape and a step of forming the second layer 32 by spirally winding the extruded adhesive material 12 to be attached onto the inner cavity surface of the vulcanization-molded tire are added. Then, in the Steps S2 and S3, the sealant material 15 is wound to be attached to the inner circumferential surface of the adhesive material 12, therefore, the first layer 31 is formed.

In a method for manufacturing the pneumatic tire 1 shown in Fig. 6, after the above-described Step S3, the step of extruding the adhesive material 12 into the ribbon shape and a step of forming the third layer 33 by spirally winding the extruded adhesive material 12 to be attached onto an inner circumferential surface of the sealant material 15 are added.

In the Step S2, tension is applied to the sealant material 15 so that the sealant material 15 extruded in a ribbon shape does not slacken. By adjusting the tension applied to the sealant material 15, it is possible to align the orientations of the fillers 13 along the extrusion direction of the sealant material 15. Thereby, entanglement of the adjacent fillers 13 is avoided, therefore, the movement of the fillers 13 to the puncture hole 20 becomes smooth, thereby, the repair of the puncture hole 20 is completed in a short time.

### working Example (Example)

Tires of size 215/55R17 having the basic structure shown in Fig. 1 were made by way of test according to the specifications listed in Table 1, and then each of the test tires was tested for the puncture sealing performance and foreign object non-adhesive performance. In the pneumatic tire of each of the specifications, the thickness of the sealant layer 11 is 3.0 mm and a width thereof is 178 mm. The test methods are as follows.

### < Puncture Sealing Performance (Test 1) >

Each of the test tires was mounted on a tire rim of 17×7.00, inflated to the inner pressure of 250 kPa, and puncture holes were artificially formed by driving nails made in accordance with Japanese Industrial Standard JIS N150 into a block portion of the tread portion. The operator left each of the test tires at 25 degrees Celsius for one hour and then removed the nails. After that, the operator visually inspected the presence or absence of air leak by using soapy water, and thus the number of puncture holes that were found to have been successfully air-sealed (repaired) was counted. The larger the numerical value, the better the puncture sealing performance is. Note that each of the nails was processed to have a length of 50 mm (hereinafter the same also applies in Test 2).

### < Puncture Sealing Performance (Test 2) >

Each of the test tires was mounted on a tire rim of 17×7.00, inflated to the inner pressure of 250 kPa, and puncture holes were artificially formed by driving nails configured in the same manner as described above into the block portion of the tread portion. Each of the test tires was loaded with a tire load of 4.2 kN and run for 750 km at a speed of 150 km/h under the temperature of 25 degrees Celsius, and then, the nails were removed. After that, the operator visually inspected the presence or absence of air leak by using soapy water, and thus the number of puncture holes that were found to have been successfully air-sealed was counted. The larger the numerical value, the better the puncture sealing performance is.

### < Foreign objects Non-Adhesive Performance (Test 3) >

Ten table tennis balls were put into the inner cavity of each of the test tires, then each of the test tires was rotated three times around the tire axial direction, and after that the balls were taken out by vibrating each of the test tires. Then, the balls remaining in the inner cavity were counted visually by the operator. The smaller the numerical value, the better the foreign object non-adhesive performance is.

**Table 1. (1/2)**

| | | Ref.1 | Ref.2 | Ref.3 | Ref.4 | Ref. 5 | Ex.1 |
|---|---|---|---|---|---|---|---|
| Fillers | Presence or Absence | Absence | Presence | Presence | Presence | Presence | Presence |
| | Legth [mm] | Absence | 5 | 40 | 15 | 15 | 6 |
| | Outer diameter [mm] | Absence | 0.5 | 0.5 | 0.1 | 3 | 0.5 |
| | Arrangement | Absence | Mixed with Adhesive material | Mixed with Adhesive material | Mixed with Adhesive material | Mixed with Adhesive material | Mixed with Adhesive material |
| Puncture sealing property | Test 1 | 45 | 46 | 42 | 47 | 42 | 48 |
| | Test 2 | 4 | 8 | 6 | 8 | 5 | 12 |
| Foreign object Non-adhesive performance | Test 3 | 10 | 8 | 8 | 8 | 8 | 8 |

**Table 1. (2/2)**

| | | Ex.2 | Ex.3 | Ex.4 | Ex.5 | Ex.6 | Ex.7 |
|---|---|---|---|---|---|---|---|
| Fillers | Presence or Absence | Presence | Presence | Presence | Presence | Presence | Presence |
| | Legth [mm] | 10 | 15 | 30 | 15 | 15 | 15 |
| | Outer diameter [mm] | 0.5 | 0.5 | 0.5 | 0.2 | 1 | 0.5 |
| | Arrangement | Mixed with Adhesive material | Mixed with Adhesive material | Mixed with Adhesive material | Mixed with Adhesive material | Mixed with Adhesive material | Mixed with Adhesive material |
| Puncture sealing property | Test 1 | 50 | 50 | 47 | 49 | 48 | 50 |
| | Test 2 | 14 | 15 | 13 | 11 | 10 | 15 |
| Foreign object Non-adhesive performance | Test 3 | 8 | 8 | 8 | 8 | 8 | 1 |

As is clear from Table 1, it was confirmed that the puncture sealing performance and the foreign object non-adhesive performance were significantly improved in the pneumatic tires as Examples as compared with References.

## Claims

1. A pneumatic tire (1) comprising an inner cavity surface and a sealant layer (11; 11A; 11B; 11C) arranged on the inner cavity surface, wherein
the sealant layer (11; 11A; 11B; 11C) includes an adhesive material (12) having adhesiveness and flowability, and fillers (13) each formed in a fibrous or rod-like shape, and
each of the fillers (13) has a length more than 5 mm and not more than 30 mm,
**characterized in that**
the fillers (13) include resin and each of the fillers (13) has an outer diameter in a range of from 0.2 to 1.0 mm.

2. The pneumatic tire (1) according to claim 1, wherein
each of the fillers (13) has the length in a range of from 10 to 15 mm.

3. The pneumatic tire (1) according to claim 1, wherein
the resin is a thermosetting resin.

4. The pneumatic tire (1) according to any one of claims 1 to 3, wherein
the sealant layer (11; 11A; 11B) includes a mixed layer (14) formed of the fillers (13) and the adhesive material (12) mixed together.

5. The pneumatic tire (1) according to any one of claims 1 to 3, wherein
the sealant layer (11B; 11C) has a first layer (31) including the fillers (13) and a second layer (32) including only the adhesive material (12).

6. The pneumatic tire (1) according to claim 5, wherein
the first layer (31) is arranged on an inner side in a tire radial direction of the second layer (32).

7. The pneumatic tire (1) according to claim 6, wherein
a third layer (33) including only the adhesive material (12) is arranged on the inner side in the tire radial direction of the first layer (31).

8. The pneumatic tire (1) according to claim 6, wherein
the first layer (31) does not include the adhesive material (12).

9. A method for manufacturing the pneumatic tire (1) according to any one of claims 1 to 9 including steps of:
vulcanization-molding a green tire,
extruding a sealant material including the fillers (13) so as to be formed in a ribbon shape, and
forming the sealant layer (11) by spirally winding the extruded sealant material so as to be attached onto the inner cavity surface of the vulcanization-molded tire.

## Patentansprüche

1. Luftreifen (1) mit einer Innenhohlraumoberfläche und einer Dichtmittelschicht (11; 11A; 11B; 11C), die auf der Innenhohlraumoberfläche angeordnet ist,
wobei die Dichtmittelschicht (11; 11A; 11B; 11C) ein Klebematerial (12) mit Klebkraft und Fließfähigkeit und Füllstoffe (13) umfasst, die jeweils in einer faserigen oder stabförmigen Form ausgebildet sind, und
jeder der Füllstoffe (13) eine Länge von mehr als 5 mm und nicht mehr als 30 mm aufweist,
**dadurch gekennzeichnet, dass**
die Füllstoffe (13) Harz umfassen und jeder der Füllstoffe (13) einen Außendurchmesser in einem Bereich von 0,2 bis 1,0 mm aufweist.

2. Luftreifen (1) nach Anspruch 1, wobei
die Länge eines jeden der Füllstoffe (13) in einem Bereich von 10 bis 15 mm liegt.

3. Luftreifen (1) nach Anspruch 1, wobei
das Harz ein wärmehärtendes Harz ist.

4. Luftreifen (1) nach einem der Ansprüche 1 bis 3, wobei
die Dichtmittelschicht (11; 11A; 11B) eine gemischte Schicht (14) umfasst,
die aus den miteinander vermischten Füllstoffen (13) und Klebematerial (12) gebildet ist.

5. Luftreifen (1) nach einem der Ansprüche 1 bis 3, wobei
die Dichtmittelschicht (11B; 11C) eine erste Schicht (31), die die Füllstoffe (13) umfasst, und eine zweite Schicht (32), die nur das Klebematerial (12) umfasst, aufweist.

6. Luftreifen (1) nach Anspruch 5, wobei
die erste Schicht (31) auf einer Innenseite in einer radialen Reifenrichtung der zweiten Schicht (32) angeordnet ist.

7. Luftreifen (1) nach Anspruch 6, wobei
eine dritte Schicht (33), die nur das Klebematerial (12) umfasst, auf der Innenseite in der radialen Reifenrichtung der ersten Schicht (31) angeordnet ist.

8. Luftreifen (1) nach Anspruch 6, wobei
die erste Schicht (31) das Klebematerial (12) nicht umfasst.

9. Verfahren zur Herstellung des Luftreifens (1) nach einem der Ansprüche 1 bis 9, das die Schritte umfasst:
Vulkanisationsformen eines Rohreifens,
Extrudieren eines Dichtmittelmaterials, das die Füllstoffe (13) umfasst, zur Formung zu einer Bandform, und
Formen der Dichtmittelschicht (11) durch spiralförmiges Wickeln des extrudierten Dichtmittelmaterials, so dass es auf der Innenhohlraumoberfläche des vulkanisationsgeformten Reifens befestigt wird.

## Revendications

1. Bandage pneumatique (1) comprenant une surface de cavité intérieure et une couche d'étanchement (11 ; 11A ; 11 B ; 11 C) agencée sur la surface de cavité intérieure, dans lequel
la couche d'étanchement (11 ; 11A ; 11B ; 11C) inclut un matériau adhésif (12) présentant un pouvoir adhésif et la propriété de pouvoir s'écouler, et des éléments de charge (13) formés chacun sous une forme fibreuse ou une forme similaire à une tige, et
chacun des éléments de charge (13) a une longueur supérieure à 5 mm et qui ne dépasse pas 30 mm,
**caractérisé en ce que**
les éléments de charge (13) incluent de la résine et chacun des éléments de charge (13) a un diamètre extérieur dans une plage de 0,2 à 1,0 mm.

2. Bandage pneumatique (1) selon la revendication 1, dans lequel
chacun des éléments de charge (13) a une longueur dans une plage de 10 à 15 mm.

3. Bandage pneumatique (1) selon la revendication 1, dans lequel la résine est une résine thermodurcissable.

4. Bandage pneumatique (1) selon l'une quelconque des revendications 1 à 3, dans lequel
la couche d'étanchement (11 ; 11A ; 11B) inclut une couche mixte (14) formée des éléments de charge (13) et du matériau adhésif (12) mélangés ensemble.

5. Bandage pneumatique (1) selon l'une quelconque des revendications 1 à 3, dans lequel
la couche d'étanchement (11B ; 11C) possède une première couche (31) incluant les éléments de charge (13) et une seconde couche (32) incluant uniquement le matériau adhésif (12).

6. Bandage pneumatique (1) selon la revendication 5, dans lequel
la première couche (31) est agencée sur un côté intérieur dans une direction radiale du pneumatique de la seconde couche (32).

7. Bandage pneumatique (1) selon la revendication 6, dans lequel
une troisième couche (33) incluant uniquement le matériau adhésif (12) est agencée sur le côté intérieur dans la direction radiale du pneumatique de la première couche (31).

8. Bandage pneumatique (1) selon la revendication 6, dans lequel
la première couche (31) n'inclut pas le matériau adhésif (12).

9. Procédé pour la fabrication de bandage pneumatique (1) selon l'une quelconque des revendications 1 à 9, incluant les étapes consistant à :
effectuer un moulage-vulcanisation d'un pneumatique cru,
extruder un matériau d'étanchement incluant les agents de charge (13) de manière à être formé sous la configuration d'un ruban, et
former la couche d'étanchement (11) en enroulant en spirale le matériau d'étanchement extrudé de manière à être attaché sur la surface de cavité intérieure du pneumatique moulé-vulcanisé.
